# EUROPÄISCHE PATENTSCHRIFT

(11) **EP 3 954 950 B1**
(45) Veröffentlichungstag und Bekanntmachung des Hinweises auf die Patenterteilung: **09.04.2025**
(21) Anmeldenummer: 20190317.6
(22) Anmeldetag: 10.08.2020
(51) Int. Cl.: F25B 31/00, F25B 15/04, F25B 25/02, F25B 43/02

(54) **SORPTIONSWÄRMEPUMPE UND SORPTIONSKREISPROZESS**
SORPTION HEAT PUMP AND SORPTION CIRCUIT PROCESS
POMPE À CHALEUR À ABSORPTION ET PROCESSUS DE CIRCUIT À ABSORPTION

(43) Veröffentlichungstag der Anmeldung: 16.02.2022
(73) Patentinhaber: AGO Technologie GmbH, 95326 Kulmbach (DE)
(72) Erfinder: Ramming, Klaus, 95336 Mainleus (DE)
(74) Vertreter: Bauer, Dirk

(56) Entgegenhaltungen:
- DE-T5- 112014 000 915
- FR-A1- 2 726 894
- US-A- 1 830 863
- US-A1- 2011 232 306

## Beschreibung

Die Erfindung betrifft zunächst eine Sorptionswärmepumpe mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung das Kältemittel absorbiert und dabei Wärme abgibt, einem ölgeschmierten Verdichter, der das Kältemittel in den Absorber fördert, einem Ölabscheider, der Leckageöl des Verdichters aus der reichen Lösung abscheidet und dem Verdichter wieder zuführt, und mit einem Öltrockner in dem Ölabscheider. Die Erfindung betrifft weiterhin einen Sorptionskreisprozess einer solchen Sorptionswärmepumpe.

Derartige Sorptionswärmepumpen mit ölgeschmierten Verdichtern sind im Betrieb deutlich effizienter und zudem wesentlich kostengünstiger als solche mit ölfreien Verdichtern. Ölgeschmierte Verdichter (insbesondere Hubkolben-, Schrauben- oder Turboverdichter) weisen allerdings immer einen gewisse Leckage des Schmiermittels (sog. "Ölwurf") in das geförderte Kältemittel auf. Die Wärmepumpe benötigt daher einen Ölabscheider, der das Leckageöl kontinuierlich aus der Lösung abscheidet und in den Verdichter zurückführt.

Verunreinigungen des in den Verdichter rückgeführten Leckageöls mit Kältemittel und Lösungsmittel mindern die Viskosität und Schmierfähigkeit des Öls im Verdichter. FR 2 726 894 A1 offenbart eine Sorptionswärmepumpe gemäß dem Oberbegriff von Anspruch 1 mit einem Öltrockner im Ölabscheider, in dem das Öl mit Heizelementen erhitzt wird, um das Kältemittel auszutreiben.

### Aufgabe

Der Erfindung liegt die Aufgabe zugrunde, den Energiebedarf der Sorptionswärmepumpe zu reduzieren.

### Lösung

Die Erfindung umfasst eine Sorptionswärmepumpe gemäß Anspruch 1 und ein Sorptionskreisprozess gemäß Anspruch 15.

Ausgehend von der bekannten Sorptionswärmepumpe wird nach der Erfindung vorgeschlagen, dass in dem Öltrockner ein Teilstrom des Kältemittels dem Leckageöl das Lösungsmittel entzieht.

Der Wasserdampf-Partialdruck im gasförmigen Ammoniak liegt deutlich unter dem Sattdampfdruck des Wassers im verunreinigten Leckageöl. In der Grenzschicht zwischen Leckageöl und dem gasförmigen Ammoniak gehen daher Wassermoleküle schon deutlich unterhalb der Siedetemperatur in die Dampfphase über und werden vom strömenden Ammoniakgas abgeführt.

Vorzugsweise steht in dem Ölabscheider einer erfindungsgemäßen Sorptionswärmepumpe die reiche Lösung unter einem Ausgangsdruck des Verdichters. Das Kältemittel bleibt dann noch überwiegend in der reichen Lösung im Lösungsmittel gelöst.

Vorzugsweise wird in einer solchen erfindungsgemäßen Sorptionswärmepumpe der Teilstrom des Kältemittels dem Öltrockner unter einem Mitteldruck unterhalb des Ausgangsdrucks zugeführt. Der Teilstrom kann dann allein durch die Druckdifferenz angetrieben hinter dem Verdichter entnommen werden. Vorzugsweise führt in einer erfindungsgemäßen Sorptionswärmepumpe der Ölabscheider dem Verdichter das Leckageöl unter einem Eingangsdruck des Verdichters zu. Das Leckageöl kann so dem Ölsumpf des Verdichters zugeführt werden.

Vorzugsweise werden der Teilstrom des Kältemittels und das Leckageöl in dem Öltrockner einer erfindungsgemäßen Sorptionswärmepumpe im Gegenstrom geführt. Die gegenläufige Strömung begünstigt den Übergang des Lösungsmittels aus dem verunreinigten Leckageöl in das Kältemittel

Vorzugsweise wird in dem Öltrockner einer erfindungsgemäßen Sorptionswärmepumpe das Leckageöl in Richtung der Erdbeschleunigung und der Teilstrom des Kältemittels entgegen der Erdbeschleunigung geführt. In einem solchen Öltrockner wird die gegenläufige Strömung allein durch die unterschiedlichen Dichten des Leckageöls und des Kältemittels angetrieben.

Vorzugsweise ist in einer erfindungsgemäßen Sorptionswärmepumpe der Öltrockner eine Füllkörper- oder Bodenkolonne. Ein solcher Öltrockner weist gegenüber beispielsweise einem durchströmten Rohr eine deutlich höhere Oberfläche auf, die mit dem verunreinigten Leckageöl benetzt wird und über die der Kältemitteldampf strömt.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Vorzugsweise weist eine erfindungsgemäße Sorptionswärmepumpe einen Austreiber auf, in dem die reiche Lösung von außen zugeführte Wärme aufnimmt und dabei das Kältemittel austreibt. Das gasförmige Kältemittel und das flüssige Lösungsmittel können dann getrennt dem Absorber zugeführt werden.

In einer bevorzugten Ausführungsform einer erfindungsgemäßen Sorptionswärmepumpe treibt die reiche Lösung das Kältemittel unter einem Niederdruck aus, der Verdichter verdichtet das Kältemittel von dem Niederdruck auf einen Hochdruck und die arme Lösung absorbiert das Kältemittel unter dem Hochdruck. Mit derartigen Sorptionswärmepumpen wird beispielsweise Abwärme aus industriellen Prozessen auf einem niedrigen Temperaturniveau genutzt und als Heizwärme auf einem höheren Temperaturniveau abgegeben.

Vorzugsweise weist eine solche erfindungsgemäße Sorptionswärmepumpe ein Drosselventil auf, das die reiche Lösung nach Austritt aus dem Absorber vom Hochdruck auf den Niederdruck entspannt. Die reiche Lösung kühlt im Drosselventil ab und kann so Niedertemperaturwärme aufnehmen.

Vorzugsweise verdichtet in einer solchen erfindungsgemäßen Sorptionswärmepumpe der Verdichter das Kältemittel nach Austritt aus dem Austreiber. Weiter vorzugsweise weist eine solche erfindungsgemäße Sorptionswärmepumpe eine Pumpe auf, die die arme Lösung nach Austritt aus dem Austreiber auf den Hochdruck und in den Absorber pumpt. Verdichter und Pumpen sind allgemein bekannte Vorrichtungen in der Kältetechnik und stehen in einer Vielzahl von Ausführungen preisgünstig zur Verfügung.

In einer anderen, gleichfalls bevorzugten Ausführungsform einer erfindungsgemäßen Sorptionswärmepumpe treibt die reiche Lösung das Kältemittel unter einem Hochdruck aus, das Kältemittel wird auf einen Niederdruck expandiert und von dem Verdichter auf einen Mitteldruck gefördert, unter dem die arme Lösung das Kältemittel absorbiert. Mit derartigen Sorptionswärmepumpen wird beispielsweise Kälte erzeugt.

Ausgehend von dem bekannten Sorptionskreisprozess wird nach der Erfindung vorgeschlagen, dass ein Teilstrom des Kältemittels in einem Öltrockner unter einem Mitteldruck zwischen dem Hochdruck und dem Niederdruck dem Leckageöl das Lösungsmittel entzieht. Ein solcher Prozess wird mit einer erfindungsgemäßen Sorptionswärmepumpe ausgeführt und zeichnet sich gleichermaßen durch deren Vorteile aus.

Vorzugsweise wird in einem erfindungsgemäßen Sorptionskreisprozess der Teilstrom hinter dem Verdichter abgezweigt und nach Austritt aus dem Öltrockner dem Kältemittel vor dem Verdichter wieder zugeführt. Im Kältemittelzweig hinter dem Verdichter weist Ammoniak eine hohe Temperatur und einen geringen Wasserdampfanteil auf und eignet sich daher besonders gut zum Verdunsten von Wasser aus dem verunreinigten Leckageöl: Ein kleiner Teilstrom des verdichteten Ammoniaks wird abgezweigt und über ein Drosselventil vom Hochdruck auf den Mitteldruck im Öltrockner entspannt und diesem von unten zugeführt. Das Ammoniak gibt dann Wärme an das verunreinigte Leckageöl ab, so dass die Verunreinigungen durch Ammoniak und Wasser ausgetrieben werden.

Der abgekühlte Kältemitteldampf, der dem verunreinigten Leckageöl das Kältemittel und das Lösungsmittel entzogen hat, tritt oben aus dem Öltrockner aus und wird über ein weiteres Drosselventil von Mitteldruck auf Niederdruck entspannt und auf der Saugseite des Verdichters dem Hauptkreislauf der Anlage wieder zugeführt.

Tritt Ammoniakdampf mit etwa 150 °*C* in den Öltrockner mit einem Massenstrom etwa 15-fach größer ist als der Massenstrom des verunreinigten Leckageöls ein, dann werden diesem die Verunreinigungen durch Ammoniak und Wasser (soweit die Kolonne ausreichend hoch dimensioniert ist) vollständig entzogen und unten aus dem Öltrockner strömt reines Öl aus.

Alternativ kann ein anderer Kältemittelstrom für den Öltrockner aus dem Kreislauf entnommen und über einen Wärmetauscher oder einen elektrischen Heizstab erwärmt werden.

Weiter alternativ oder ergänzend kann das verunreinigte Leckageöl derart vorgewärmt werden, dass die mitgeführten Verunreinigungen aus Kälte- und Lösungsmittel in die dampfförmige Phase übergehen und von dem Kältemittelstrom abgeführt werden.

Vorzugsweise werden in einem erfindungsgemäßen Sorptionskreisprozess das Leckageöl und der Teilstrom des Kältemittels diskontinuierlich in den Öltrockner geführt. Das Leckageöl kann so auch bei nur geringfügigem Ölwurf des Verdichters wirtschaftlich getrocknet werden.

Vorzugsweise wird in einem solchen erfindungsgemäßen Sorptionskreisprozess das Leckageöl in einem Ölsumpf gesammelt und bei Erreichen eines Grenzpegels diskontinuierlich aus dem Ölsumpf in den Öltrockner geführt. Der Öltrockner wird dann abhängig vom tatsächlichen Bedarf in Betrieb gesetzt. Alternativ kann das Leckageöl zeitgesteuert in den Öltrockner geführt werden.

Vorzugsweise wird in einem erfindungsgemäßen Sorptionskreisprozess das getrocknete Öl aus dem Öltrockner gesammelt und bei Erreichen eines Grenzpegels dem Verdichter zugeführt. Das getrocknete Öl kann dann abkühlen, so dass es nicht zu heiß in den Verdichter geleitet wird. Alternativ kann das getrocknete Leckageöl zeit- oder temperaturgesteuert dem Verdichter zugeführt werden.

Das Lösungsmittel kann aus dem verunreinigten Leckageöl nur verdunsten wenn es in der Grenzfläche mit dem Kältemitteldampf in Kontakt steht. Durch bloßes Erwärmen des Ölsumpfes würde zunächst das Ammoniak verdampfen und das Öl auf dem verbleibenden Wasser aufschwimmen und dessen Verdunstung verhindern.

### Ausführungsbeispiele

Die Erfindung wird nachfolgend anhand von Ausführungsbeispielen erläutert. Es zeigen schematisch
- Fig. 1a: eine erfindungsgemäße Sorptionswärmepumpe und
- Fig. 1b: den Ölabscheider der erfindungsgemäßen Sorptionswärmepumpe und
- Fig. 2: eine zweite erfindungsgemäße Sorptionswärmepumpe.

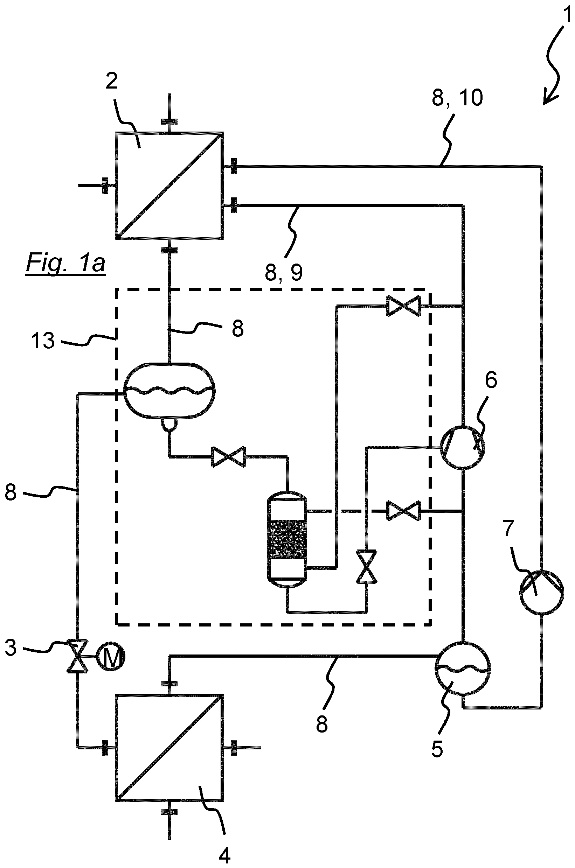

Die in Figur 1a gezeigte erfindungsgemäße Sorptionswärmepumpe 1 weist einen Absorber 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem dazu parallel verlaufenden Lösungsmittelzweig 10 vom Abscheider 5 zum Absorber 2 angeordnet ist.

In einem Zyklus eines erfindungsgemäßen Sorptionskreisprozesses mit Ammoniak (NH₃) als Kältemittel in Wasser als Lösungsmittel absorbiert in der ersten Sorptionswärmepumpe 1 im Absorber 2 ein Strom der armen Lösung einen Strom des Kältemittels und gibt an ein Heizmedium Heizleistung ab. Die mit 59 °C aus dem Absorber 2 austretende reiche Lösung wird durch das Drosselventil 3 auf den Niederdruck von 8 *bar* entspannt und nimmt im Austreiber 4 aus einer Wärmequelle Wärme auf. Aus dem nachfolgenden Abscheider 5 wird die arme Lösung in die Pumpe 7 und das gasförmige Kältemittel in den Verdichter 6 geführt und auf den Hochdruck von 33 *bar* und in den Absorber 2 gepumpt.

Der Verdichter 6 - hier: ein Kolbenverdichter - wird mit Öl geschmiert, das aufgrund der unvermeidbaren Leckage im Verdichter 6 das Kältemittel und im Absorber 2 die reiche Lösung verunreinigt. In einem Lösungssammler 11 zwischen Absorber 2 und Drosselventil 3 sinkt das Leckageöl in einen Ölsumpf 12 ab.

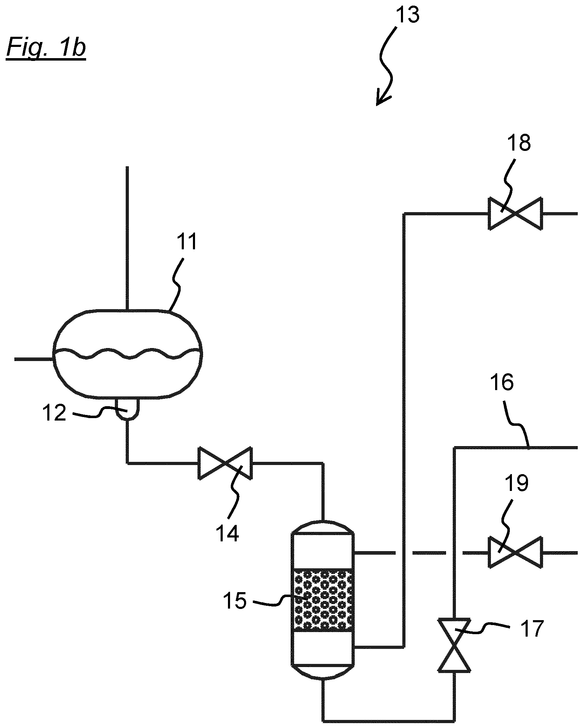

Der Lösungssammler 11 ist Teil eines in Figur 1b im Detail dargestellten Ölabscheiders 13 der Sorptionswärmepumpe 1, in dem das mit Kältemittel und Lösungsmittel verunreinigte Leckageöl in einem Leckageölstrom von 0,5 *kg*/*h* aus dem Ölsumpf 12 zunächst über ein Drosselventil 14 auf einen Mitteldruck von 8,5 *bar* gedrosselt in einen Öltrockner 15 und gereinigt in einem Strom von *0,25 kg*/*h* aus diesem über eine Schmiermittelleitung 16 und ein weiteres Drosselventil 17 auf den Niederdruck gedrosselt in ein nicht dargestelltes Reservoir des Verdichters 6 geführt wird.

Das verunreinigte Leckageöl wird dem Öltrockner 15 - hier: eine Füllkörperkolonne - oben zugeführt, benetzt die Oberfläche der nicht dargestellten Füllkörper und tropft von diesen nach unten zu der Schmiermittelleitung 16 ab. Von unten wird dem Öltrockner 15 über ein Drosselventil 18 ein zwischen dem Verdichter 6 und dem Absorber 2 abgezweigter Teilstrom von 10 *kg*/*h* des Kältemitteldampfes mit einer Temperatur von 134 °*C* zugeführt. Der Kältemitteldampf strömt in dem Öltrockner 15 nach oben über die Füllkörper, entzieht dem Leckageöl das Kältemittel und das Lösungsmittel und wird in einem Strom von 10,25 *kg*/*h* bei einer Temperatur von 98 °*C* oben aus dem Öltrockner 15 über ein weiteres Drosselventil 19 hinter dem Abscheider 5 in den Verdichter 6 gespeist.

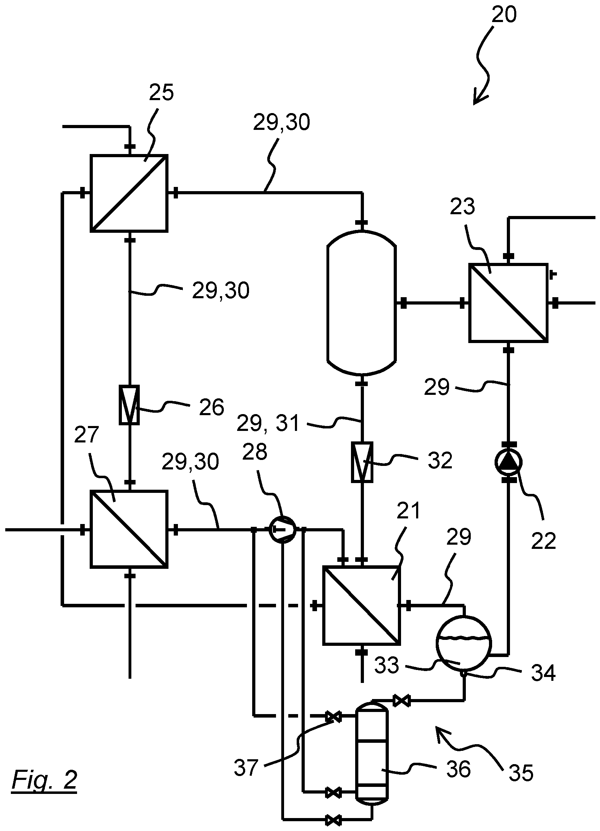

Die in Figur 2 gezeigte zweite erfindungsgemäße Sorptionswärmepumpe 20 weist einen Absorber 21, eine Lösungspumpe 22, einen Austreiber 23 mit Rektifikationskolonne 24, einen Kondensator 25, ein Expansionsventil 26, einen Verdampfer 27 und einen Verdichter 28 sowie Rohrleitungen 29 auf, die die vorgenannten in dieser Reihenfolge zu einem kreisförmig geschlossenen System verbinden, wobei parallel zu einem Kältemittelzweig 30 mit Kondensator 25, Verdampfer 27 und Verdichter 28 ein Lösungszweig 31 mit einem Entspannungsventil 32 für die arme Lösung von der Rektifikationskolonne 24 zu dem Absorber 21 verläuft.

In einem Zyklus eines erfindungsgemäßen Sorptionskreisprozesses mit Ammoniak (NH₃) als Kältemittel in Wasser als Lösungsmittel absorbiert in der zweiten Sorptionswärmepumpe 20 im Absorber 21 die arme Lösung das Kältemittel und gibt an Kühlwasser Wärme ab. Die aus dem Absorber 21 austretende reiche Lösung wird von der Lösungspumpe 22 auf einen Hochdruck in den Austreiber 23 gepumpt, wo sie aus einem Heizmedium Wärme aufnimmt und das gasförmige Kältemittel austreibt. Die verbleibende arme Lösung wird aus der Rektifikationskolonne 24 durch den Lösungszweig zum Absorber 21 geführt und im Entspannungsventil 32 auf einen Mitteldruck entspannt. Das Kältemittel gibt im Kondensator 25 an das aus dem Absorber 21 kommende Kühlwasser weitere Wärme ab, kondensiert, wird durch das Expansionsventil 26 auf einen Niederdruck entspannt, nimmt im Verdampfer 27 aus einem Kälteträger Wärme auf und wird vom Verdichter 28 auf den Mitteldruck im Absorber 21 gefördert.

Der Verdichter 28 - hier: ein Schraubenverdichter - wird mit Öl geschmiert, das aufgrund von Leckage im Verdichter 28 die aus dem Verdichter 28 austretende reiche Lösung verunreinigt. In einem Lösungssammler 33 zwischen Absorber 21 und Lösungspumpe 22 sinkt das Leckageöl in einen Ölsumpf 34 ab. Der Lösungssammler 33 ist Teil eines Ölabscheiders 35 der

Sorptionswärmepumpe 20, der dem Ölabscheider 13 der ersten Sorptionswärmepumpe 1 entspricht.

Aus dem Kältemitteldampf auf dem Mitteldruck wird zwischen Verdichter 28 und Absorber 21 ein Teilstrom abgezweigt, in den Öltrockner 36 des Ölabscheiders 35 und aus diesem über ein Drosselventil 37 zwischen Verdampfer 27 und Verdichter 28 auf dem Niederdruck wieder zugeführt.

In den Figuren sind
- 1: Sorptionswärmepumpe
- 2: Absorber
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Lösungssammler
- 12: Ölsumpf
- 13: Ölabscheider
- 14: Drosselventil
- 15: Öltrockner
- 16: Schmiermittelleitung
- 17: Drosselventil
- 18: Drosselventil
- 19: Drosselventil
- 20: Sorptionswärmepumpe
- 21: Absorber
- 22: Lösungspumpe
- 23: Austreiber
- 24: Rektifikationskolonne
- 25: Kondensator
- 26: Expansionsventil
- 27: Verdampfer
- 28: Verdichter
- 29: Rohrleitung
- 30: Kältemittelzweig
- 31: Lösungszweig
- 32: Entspannungsventil
- 33: Lösungssammler
- 34: Ölsumpf
- 35: Ölabscheider
- 36: Öltrockner
- 37: Drosselventil

## Patentansprüche

1. Sorptionswärmepumpe (1, 20) mit einem gasförmigem Kältemittel und einem flüssigem Lösungsmittel, einer armen und einer reichen Lösung, wobei die arme und die reiche Lösung einphasige Mischungen des Lösungsmittels und des Kältemittels sind, sowie mit einem Absorber (2, 21), in dem die arme Lösung das Kältemittel absorbiert und dabei Wärme abgibt, einem ölgeschmierten Verdichter (6, 28), der das Kältemittel in den Absorber (2, 21) fördert, einem Ölabscheider (13, 35), der Leckageöl des Verdichters (6, 28) aus der reichen Lösung abscheidet und dem Verdichter (6, 28) wieder zuführt, und mit einem Öltrockner (15, 36) in dem Ölabscheider (13, 35), ***dadurch gekennzeichnet, dass*** in dem Öltrockner (15, 36) ein Teilstrom des Kältemittels dem Leckageöl das Lösungsmittel entzieht.

2. Sorptionswärmepumpe (1, 20) nach dem vorgenannten Anspruch, ***dadurch gekennzeichnet, dass*** in dem Ölabscheider (13, 35) die reiche Lösung unter einem Ausgangsdruck des Verdichters (6, 28) steht.

3. Sorptionswärmepumpe (1, 20) nach dem vorgenannten Anspruch, ***dadurch gekennzeichnet, dass*** der Teilstrom des Kältemittels dem Öltrockner (15, 36) unter einem Mitteldruck unterhalb des Ausgangsdrucks zugeführt wird.

4. Sorptionswärmepumpe (1, 20) nach einem der vorgenannten Ansprüche, ***dadurch gekennzeichnet, dass*** der Ölabscheider (13, 35) dem Verdichter (6, 28) das Leckageöl unter einem Eingangsdruck des Verdichters (6, 28) zuführt.

5. Sorptionswärmepumpe (1, 20) nach einem der vorgenannten Ansprüche, ***dadurch gekennzeichnet, dass*** in dem Öltrockner (15, 36) der Teilstrom des Kältemittels und das Leckageöl im Gegenstrom geführt werden.

6. Sorptionswärmepumpe (1, 20) nach dem vorgenannten Anspruch, ***dadurch gekennzeichnet, dass*** in dem Öltrockner (15, 36) das Leckageöl in Richtung der Erdbeschleunigung und der Teilstrom des Kältemittels entgegen der Erdbeschleunigung geführt wird.

7. Sorptionswärmepumpe (1, 20) nach einem der vorgenannten Ansprüche, ***dadurch gekennzeichnet, dass*** der Öltrockner (15, 36) eine Füllkörper- oder Bodenkolonne ist.

8. Sorptionswärmepumpe (1, 20) nach einem der vorgenannten Ansprüche, ***dadurch gekennzeichnet, dass*** das Lösungsmittel Wasser und das Kältemittel Ammoniak ist.

9. Sorptionswärmepumpe (1, 20) nach einem der vorgenannten Ansprüche, ***gekennzeichnet durch*** einen Austreiber (4, 23), in dem die reiche Lösung von außen zugeführte Wärme aufnimmt und dabei das Kältemittel austreibt,

10. Sorptionswärmepumpe (1) nach dem vorgenannten Anspruch, ***dadurch gekennzeichnet, dass*** die reiche Lösung das Kältemittel unter einem Niederdruck austreibt, der Verdichter (6) das Kältemittel von dem Niederdruck auf einen Hochdruck verdichtet und die arme Lösung das Kältemittel unter dem Hochdruck absorbiert.

11. Sorptionswärmepumpe (1) nach dem vorgenannten Anspruch, ***gekennzeichnet durch*** ein Drosselventil (3), das die reiche Lösung nach Austritt aus dem Absorber (2) vom Hochdruck auf den Niederdruck entspannt.

12. Sorptionswärmepumpe (1) nach dem vorgenannten Anspruch, ***dadurch gekennzeichnet, dass*** der Verdichter (6) das Kältemittel nach Austritt aus dem Austreiber (4) verdichtet.

13. Sorptionswärmepumpe (1) nach einem der Ansprüche 10 bis 12, ***gekennzeichnet durch*** eine Pumpe (7), die die arme Lösung auf den Hochdruck und in den Absorber (2) pumpt.

14. Sorptionswärmepumpe (20) nach Anspruch 9, ***dadurch gekennzeichnet, dass*** die reiche Lösung das Kältemittel unter einem Hochdruck austreibt, das Kältemittel auf einen Niederdruck expandiert und von dem Verdichter (28) auf einen Mitteldruck gefördert wird, unter dem die arme Lösung das Kältemittel absorbiert.

15. Sorptionskreisprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann das Kältemittel mittels eine ölgeschmierten Verdichters (6, 28) gefördert wird, und wobei Leckageöl des Verdichters (6, 28) aus der reichen Lösung abgeschieden und dem Verdichter (6, 28) wieder zugeführt wird, ***dadurch gekennzeichnet, dass*** ein Teilstrom des Kältemittels in einem Öltrockner (15, 36) dem Leckageöl das Lösungsmittel entzieht.

16. Sorptionskreisprozess nach dem vorgenannten Anspruch, ***dadurch gekennzeichnet, dass*** der Teilstrom hinter dem Verdichter (6, 28) abgezweigt und nach Austritt aus dem Öltrockner (15, 36) dem Kältemittel vor dem Verdichter (6, 28) wieder zugeführt wird.

17. Sorptionskreisprozess nach einem der Ansprüche 5 oder 6, ***dadurch gekennzeichnet, dass*** das Leckageöl und der Teilstrom des Kältemittels diskontinuierlich in den Öltrockner (15, 36) geführt werden.

18. Sorptionskreisprozess nach dem vorgenannten Anspruch, ***dadurch gekennzeichnet, dass*** das Leckageöl in einem Ölsumpf (12, 34) gesammelt und bei Erreichen eines Grenzpegels aus dem Ölsumpf (12, 34) in den Öltrockner (15, 36) geführt wird.

19. Sorptionskreisprozess nach einem der vorgenannten Ansprüche, ***dadurch gekennzeichnet, dass*** das getrocknete Öl aus dem Öltrockner (15, 36) gesammelt und bei Erreichen eines Grenzpegels dem Verdichter (6) zugeführt wird.

## Claims

1. Sorption heat pump (1, 20) comprising a gaseous refrigerant and a liquid solvent, a low-content and a rich solution, the low-content and the rich solution, wherein single-phase mixtures of the solvent and the refrigerant, as well as an absorber (2, 21) in which the low-content solution absorbs the refrigerant, which thereby releasing heat, an oil-lubricated compressor (6, 28) which injects the refrigerant into the absorber (2, 21), an oil separator (13, 35) which separates leakage oil from the compressor (6, 28) from the rich solution and returns it to the compressor (6, 28), and an oil dryer (15, 36) in the oil separator (13, 35), ***characterized in* that**, in the oil dryer (15, 36), a partial flow of the refrigerant removes the solvent from the leakage oil.

2. The sorption heat pump (1, 20) according to the preceding claim, ***characterized in that*** the rich solution is at an outlet pressure of the compressor (6, 28) in the oil separator (13, 35).

3. The sorption heat pump (1, 20) according to the preceding claim, ***characterized in* that** the partial flow of the refrigerant is supplied to the oil dryer (15, 36) at a medium pressure below the outlet pressure.

4. The sorption heat pump (1, 20) according to any of one of the preceding claims, ***characterized in* that** the oil separator (13, 35) supplies the leakage oil to the compressor (6, 28) at an inlet pressure of the compressor (6, 28).

5. The sorption heat pump (1, 20) according to any one of the preceding claims, ***characterized in* that** the partial flow of the refrigerant and the leakage oil are conveyed as currents that flow inversely to one another in the oil dryer (15, 36).

6. The sorption heat pump (1, 20) according to the preceding claim, ***characterized in* that** the leakage oil is directed in the direction of gravitational acceleration and the partial flow of the refrigerant is directed in the opposite direction of gravitational acceleration in the oil dryer (15, 36).

7. The sorption heat pump (1, 20) according to any one of the preceding claims, ***characterized in* that** the oil dryer (15, 36) is a packed or plate column.

8. The sorption heat pump (1, 20) according to any one of the preceding claims, ***characterized in* that** the solvent is water and the refrigerant is ammonia.

9. The sorption heat pump (1, 20) according to any one of the preceding claims, ***characterized by*** an expelling drift (4, 23) in which the rich solution absorbs heat supplied from outside, thereby expelling the refrigerant,

10. The sorption heat pump (1) according to the preceding claim, ***characterized in* that** the rich solution expels the refrigerant at a low pressure, the compressor (6) compresses the refrigerant from the low pressure to a high pressure, and the low-content solution absorbs the refrigerant at the high pressure.

11. The sorption heat pump (1) according to the preceding claim, ***characterized by*** a throttle valve (3) which relaxes the rich solution from high pressure to low pressure after exiting from the absorber (2).

12. The sorption heat pump (1) according to the preceding claim, ***characterized in that*** the compressor (6) compresses the refrigerant after exiting the expeller (4) .

13. The sorption heat pump (1) according to any one of Claims 10 to 12, ***characterized by*** a pump (7) pumping the low-content solution onto the high pressure and into the absorber (2).

14. The sorption heat pump (20) according to Claim 9, ***characterized in* that** the rich solution expels the refrigerant at a high pressure, the refrigerant expands to a low pressure and is conveyed by the compressor (28) to a medium pressure at which the low-content solution absorbs the refrigerant.

15. Sorption cycle process with a gaseous refrigerant and a liquid solvent, a low-content and a rich solution, wherein the low-content and the rich solution are single-phase mixtures of the solvent and the refrigerant, and wherein the low-content solution absorbs the refrigerant and thereby releases heat, then the refrigerant is conveyed by an oil-lubricated compressor (6, 28), and wherein compressor leakage oil (6, 28) is separated from the rich solution and returned to the compressor (6, 28), ***characterized in that*** a partial flow of the refrigerant in an oil dryer (15, 36) removes the solvent from the leakage oil.

16. The sorption cycle process according to the preceding claim, ***characterized in* that** the partial flow is diverted downstream of the compressor (6, 28) and returned to the refrigerant upstream of the compressor (6, 28) after exiting the oil dryer (15, 36).

17. The sorption cycle process according to any one of Claims 5 or 6, ***characterized in* that** the leakage oil and the partial flow of the refrigerant are discontinuously supplied into the oil dryer (15, 36).

18. The sorption cycle process according to the preceding claim, ***characterized in* that** the leakage oil is collected in an oil sump (12, 34) and supplied from the oil sump (12, 34) into the oil dryer (15, 36) when a limit level is reached.

19. The sorption cycle process according to any of the preceding claims, ***characterized in* that** the dried oil is collected from the oil dryer (15, 36) and fed to the compressor (6) when a limit level is reached.

## Revendications

1. Pompe à chaleur à sorption (1, 20), avec un agent réfrigérant gazeux et un solvant liquide, une solution pauvre et une solution riche, la solution pauvre et la solution riche étant des mélanges monophasés du solvant et de l'agent réfrigérant, ainsi qu'avec un absorbeur (2, 21), dans lequel la solution pauvre absorbe l'agent réfrigérant et restitue de la chaleur à cet effet, un compresseur (6, 28) lubrifié à l'huile, qui convoie l'agent réfrigérant dans l'absorbeur (2, 21), un séparateur d'huile (13, 35), qui sépare de l'huile de fuite du compresseur (6, 28) hors de la solution riche et la ramène vers le compresseur (6, 28) et avec un déshydrateur d'huile (15, 36) dans le séparateur d'huile (13, 35), **caractérisée en ce que** dans le déshydrateur d'huile (15, 36), un flux partiel de l'agent réfrigérant soutire le solvant à l'huile de fuite.

2. Pompe à chaleur à sorption (1, 20) selon la revendication précédente, **caractérisée en ce que** dans le séparateur d'huile (13, 35), la solution riche se trouve sous une pression de sortie du compresseur (6, 28) .

3. Pompe à chaleur à sorption (1, 20) selon la revendication précédente, **caractérisée en ce que** le flux partiel de l'agent réfrigérant est amené vers le déshydrateur d'huile (15, 36) sous une pression moyenne inférieure à la pression de sortie.

4. Pompe à chaleur à sorption (1, 20) selon l'une quelconque des revendications précédentes, **caractérisée en ce que** le séparateur d'huile (13, 35) amène vers le compresseur (6, 28) l'huile de fuite sous une pression d'entrée du compresseur (6, 28).

5. Pompe à chaleur à sorption (1, 20) selon l'une quelconque des revendications précédentes, **caractérisée en ce que** dans le déshydrateur d'huile (15, 36), le flux partiel de l'agent réfrigérant et l'huile de fuite sont conduits à contre-courant.

6. Pompe à chaleur à sorption (1, 20) selon la revendication précédente, **caractérisée en ce que** dans le déshydrateur d'huile (15, 36), l'huile de fuite est conduite en direction de l'accélération gravitationnelle et le flux partiel de l'agent réfrigérant est conduit à l'encontre de l'accélération gravitationnelle.

7. Pompe à chaleur à sorption (1, 20) selon l'une quelconque des revendications précédentes, **caractérisée en ce que** le déshydrateur d'huile (15, 36) est une colonne à corps plein ou une colonne à plateaux.

8. Pompe à chaleur à sorption (1, 20) selon l'une quelconque des revendications précédentes, **caractérisée en ce que** le solvant est de l'eau et l'agent réfrigérant est de l'ammoniac.

9. Pompe à chaleur à sorption (1, 20) selon l'une quelconque des revendications précédentes, **caractérisée par** un éjecteur (4, 23), dans lequel la solution riche reprend de la chaleur amenée par l'extérieur et éjecte à cet effet l'agent réfrigérant,

10. Pompe à chaleur à sorption (1) selon la revendication précédente, **caractérisée en ce que** la solution riche éjecte l'agent réfrigérant sous une basse pression, le compresseur (6) comprime l'agent réfrigérant de la basse pression à une haute pression et la solution pauvre absorbe l'agent réfrigérant sous la haute pression.

11. Pompe à chaleur à sorption (1) selon la revendication précédente, **caractérisée par** une soupape d'étranglement (3), qui après sa sortie de l'absorbeur (2), détend la solution riche de la haute pression à la basse pression.

12. Pompe à chaleur à sorption (1) selon la revendication précédente, **caractérisée en ce qu'**après sa sortie de l'éjecteur (4), le compresseur (6) comprime l'agent réfrigérant.

13. Pompe à chaleur à sorption (1) selon l'une quelconque des revendications 10 à 12, **caractérisée par** une pompe (7), qui pompe la solution pauvre sous la haute pression et dans l'absorbeur (2).

14. Pompe à chaleur à sorption (20) selon la revendication 9, **caractérisée en ce que** la solution riche éjecte l'agent réfrigérant sous une haute pression, amène en expansion l'agent réfrigérant à une basse pression et est convoyée par le compresseur (28) à une moyenne pression, sous laquelle la solution pauvre absorbe l'agent réfrigérant.

15. Processus de circuit de sorption, avec un agent réfrigérant gazeux et un solvant liquide, une solution pauvre et une solution riche, la solution pauvre et la solution riche étant des mélanges monophasés du solvant et de l'agent réfrigérant et la solution pauvre absorbant l'agent réfrigérant et restituant de la chaleur à cet effet, l'agent réfrigérant étant convoyé ensuite au moyen d'un compresseur (6, 28) lubrifié à l'huile et l'huile de fuite du compresseur (6, 28) étant séparée de la solution riche et ramenée vers le compresseur (6, 28), **caractérisé en ce que** dans un déshydrateur d'huile (15, 36), un flux partiel de l'agent réfrigérant soutire le solvant à l'huile de fuite.

16. Processus de circuit de sorption selon la revendication précédente, **caractérisé en ce que** le flux partiel est dérivé derrière le compresseur (6, 28) et après sa sortie du déshydrateur d'huile (15, 36), est ramené vers l'agent réfrigérant à l'avant du compresseur (6, 28).

17. Processus de circuit de sorption selon l'une quelconque des revendications 5 ou 6, **caractérisé en ce que** l'huile de fuite et le flux partiel de l'agent réfrigérant sont conduits de manière discontinue dans le déshydrateur d'huile (15, 36).

18. Processus de circuit de sorption selon la revendication précédente, **caractérisé en ce que** l'huile de fuite est collectée dans un carter d'huile (12, 34) et à l'atteinte d'un niveau limite, est conduite hors du carter d'huile (12, 34) dans le déshydrateur d'huile (15, 36).

19. Processus de circuit de sorption selon l'une quelconque des revendications précédentes, **caractérisé en ce que** l'huile séchée est collectée hors du déshydrateur d'huile (15, 36) et à l'atteinte d'un niveau limite, est amenée vers le compresseur (6).
